# EUROPEAN PATENT SPECIFICATION

(11) **EP 3 992 442 B1**
(45) Date of publication and mention of the grant of the patent: **03.01.2024**
(21) Application number: 20205205.6
(22) Date of filing: 02.11.2020
(51) Int. Cl.: F01N 3/20, F01N 3/28, B01F 25/00

(54) **EXHAUST GAS PURIFICATION DEVICE, FLOW PATH FORMING MEMBER, AND TUBULAR MEMBER**
ABGASREINIGUNGSVORRICHTUNG, STRÖMUNGSWEGBILDUNGSELEMENT UND ROHRFÖRMIGES ELEMENT
DISPOSITIF DE PURIFICATION DE GAZ D'ÉCHAPPEMENT, ÉLÉMENT DE FORMATION DE TRAJET D'ÉCOULEMENT ET ÉLÉMENT TUBULAIRE

(43) Date of publication of application: 04.05.2022
(73) Proprietor: Nissin Kogyo Co., Ltd., Yamato-Shi, Kanagawa 242-0029 (JP)
(72) Inventor: KIMURA, Koichi, Tochigi-Shi Tochigi 3294306 (JP); YOSHIZAWA, Sachiko, Tochigi-Shi Tochigi 3294306 (JP); MIYAZAWA, Kenichi, Tochigi-Shi Tochigi 3294306 (JP)
(74) Representative: Beckmann, Claus

(56) References cited:
- EP-A1- 3 067 529
- JP-A- 2009 103 019
- US-A1- 2014 196 441

## Description

### FIELD

Embodiments described herein relate generally to an exhaust gas purification device, a flow path forming member, and a tubular member.

### BACKGROUND

A urea selective catalytic reduction (SCR) system has been known as an exhaust gas purification device for an internal combustion engine such as a diesel engine. The urea SCR system includes a mixing pipe that injects urea water as a reducing agent into an exhaust flow path to mix the urea water with the exhaust gas, and a reduction catalyst arranged downstream of the mixing pipe in the exhaust flow path.

In the conventional urea SCR system, when urea water is injected into the exhaust gas in the mixing pipe, the injected urea water undergoes a thermal decomposition and hydrolysis to produce ammonia (NH₃). Nitrogen oxides (NO_{X}) in the exhaust gas are reduced by the produced NH₃ to nitrogen (N₂) and water (H₂O) in the reduction catalyst. In this manner, the conventional exhaust gas purification device selectively reduces nitrogen oxides in the exhaust gas to purify it, thereby making the exhaust gas substantially harmless.

There is also a conventional exhaust gas purification device in which a guide fin is arranged on the upstream side of the mixing pipe in the exhaust flow path.

Reference may be had to, for example, Japanese Laid-Open Patent Publication No. 2009-103019.

EP 3 067 529 A1 relates to a device for the aftertreatment of exhaust gas from an internal combustion engine, preferably by mixing the exhaust gas with a metered, at least partially liquid additive, vaporizing the liquid portion of the additive and preparing the exhaust gas/additive mixture for a downstream catalytic converter.

US 2014/196441 A1 discloses a reductant aqueous solution mixing device interposed between a filter device that captures particulate matters in an exhaust gas and a selective catalytic reduction device disposed downstream of the filter device, the reductant aqueous solution mixing device adding a reductant aqueous solution in the exhaust gas.

However, in the conventional exhaust gas purification device as described above, it is difficult to efficiently generate a swirling flow in a tubular member such as a mixing pipe.

### BRIEF DESCRIPTION

In one aspect, the present invention is directed to a technology for efficiently generating a swirling flow in a tubular member.

In accordance with an exemplary embodiment, an exhaust gas purification device includes: a flow path forming member that forms an exhaust flow path for exhaust gas discharged from an internal combustion engine, and includes an exhaust inlet port and a connection opening from which the exhaust gas flows out, wherein the center of the exhaust inlet port is located on a first axis, and the center of the connection opening is located on a second axis different from the first axis; and a tubular member having a tubular shape, which is located in part of the exhaust flow path and includes a peripheral wall having an opening to take in the exhaust gas. The tubular member is connected to a nozzle to spray a reducing agent into the tubular member at one end and has an opening that opens to the connection opening at the other end. In the tubular member, the center of a spray port to spray the reducing agent is located on the second axis. The exhaust flow path includes an exhaust flow path portion leading to the tubular member. The exhaust flow path portion is offset to one side with respect to a line segment that connects the center of the exhaust inlet port on the first axis and the center of the spray port on the second axis as viewed in the direction of the second axis. The tubular member includes, at the other end, a tip bent inward to form a control blade that spirally diffuses the reducing agent.

In one aspect, the present invention enables the generation of a swirling flow in a tubular member.

### DRAWINGS

FIG. 1 is a schematic front view of an exhaust gas purification device according to an embodiment;
FIG. 2 is a perspective view of the exhaust gas purification device viewed from the exhaust inlet port side;
FIG. 3 is a perspective view of a casing;
FIG. 4A is a perspective view of a first casing and a guide member;
FIG. 4B is a perspective view of a second casing and the guide member;
FIG. 5 is a perspective view of an injector viewed from X1 side;
FIG. 6 is a perspective view of the injector viewed from X2 side;
FIG. 7 is a perspective view of a nozzle attachment portion as a single item;
FIG. 8 is a perspective view of a baffle as a single item;
FIG. 9 is a perspective view of a connection pipe as a single item;
FIG. 10 is a perspective view illustrating the baffle and the connection pipe with an outlet part;
FIG. 11 is a diagram for explaining the flow of exhaust gas and the like in the casing of the exhaust gas purification device;
FIG. 12 is a diagram for explaining the diffusing operation of a control blade;
FIG. 13 is a perspective cross-sectional view passing through an exhaust flow path portion and a urea spray space;
FIG. 14 is a schematic diagram of the exhaust flow path (the exhaust flow path portion leading to the urea spray space) and the flow of exhaust gas therein; and
FIG. 15 is a schematic diagram of an exhaust flow path portion leading to a urea spray space and the flow of exhaust gas therein according to a comparative example.

### DETAILED DESCRIPTION

In the following, illustrative embodiments will be described in detail with reference to the accompanying drawings. Note that like parts are designated by like reference numerals or characters throughout the description of the embodiments. Hereinafter, the internal combustion engine side relative to the direction in which exhaust gas flows is referred to as "upstream" or "upstream side", and the opposite side (outside air side) is referred to as "downstream" or "downstream side" unless otherwise specified.

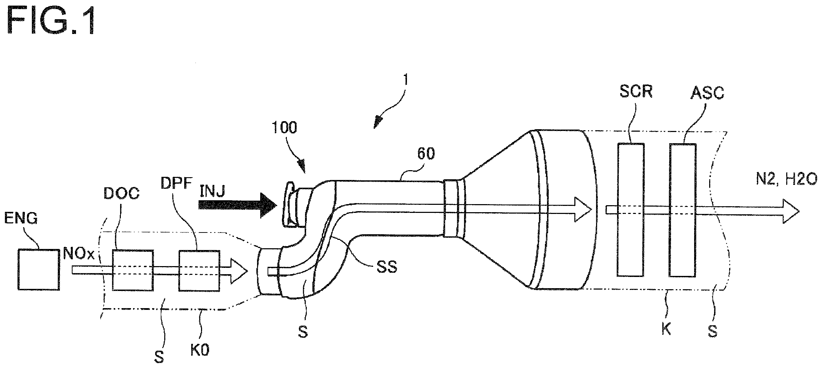

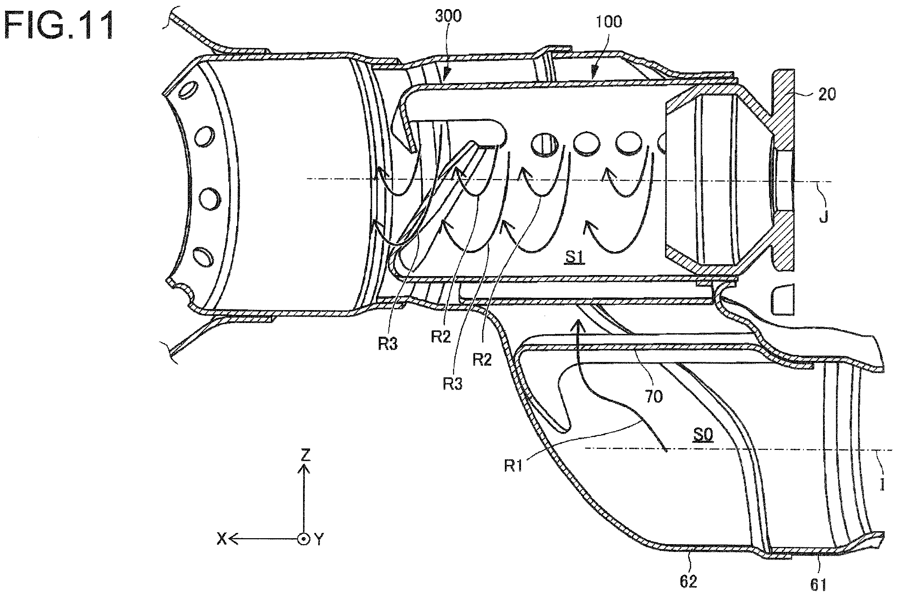

FIG. 1 is a schematic front view of an exhaust gas purification device 1 according to an embodiment. In FIG. 1, white arrows roughly indicate the direction in which exhaust gas flows (exhaust flow direction). The exhaust gas flows with swirling motion along the white arrows (see FIG. 11) as described later.

The exhaust gas purification device 1 of the embodiment is a device that purifies exhaust gas discharged from an internal combustion engine ENG such as a diesel engine, and is installed between the internal combustion engine ENG and the outside air in the path of the flow of exhaust gas. The exhaust gas purification device 1 is, for example, a selective catalytic reduction (SCR) purification system that selectively reduces nitrogen oxides NO_{X} in the exhaust gas discharged from the internal combustion engine ENG using urea water (urea aqueous solution) as a reducing agent.

As illustrated in FIG. 1, the exhaust gas purification device 1 includes an exhaust flow path S formed inside an airtight tubular casing 60 (flow path forming member), a container K0, a container K, and the like. The exhaust flow path S has a round cross section to reduce the pressure loss as much as possible.

Specifically, the exhaust gas purification device 1 includes a diesel oxidation catalyst DOC, a diesel particulate filter DPF, and a selective catalytic reduction system SCR that supports a reduction catalyst, which are arranged in the exhaust flow path S. The exhaust gas purification device 1 may further include, as appropriate, an ammonia slip catalyst ASC. The ammonia slip catalyst ASC is an oxidation catalyst and is arranged downstream of the selective catalytic reduction system SCR in the exhaust flow path S to prevent ammonia NH₃ from passing through and being released into the outside air.

The oxidation catalyst DOC oxidatively purifies hydrocarbon HC and carbon monoxide CO, which are harmful components in the exhaust gas. The oxidation catalyst DOC may be a ceramic honeycomb, a metal mesh, or the like coated with a catalyst component such as platinum or palladium that promotes the oxidation of hydrocarbon HC and carbon monoxide CO.

The diesel particulate filter DPF is a filter that collects or removes particulate matter from the exhaust gas.

The selective catalytic reduction system SCR may be made from a porous ceramic substrate such as, for example, cordierite, which is coated with a catalyst such as zeolite, vanadium oxide, or tungsten oxide. Although FIG. 1 illustrates only one selective catalytic reduction system SCR, there may be a plurality of them arranged at intervals in the exhaust flow direction SS.

In this embodiment, the exhaust gas purification device 1 includes the casing 60, a guide member 70, an injector 100, a baffle 120, a connection pipe 130, and an outlet part 140. In the embodiment, the casing 60, the guide member 70, the baffle 120, the connection pipe 130, and the outlet part 140 represent an example of the flow path forming member that forms the exhaust flow path S for the exhaust gas discharged from the internal combustion engine ENG.

In the exhaust gas purification device 1, when the injector 100 injects urea water into the exhaust gas flowing through the exhaust flow path S, the injected urea water undergoes a thermal decomposition and hydrolysis to produce ammonia NH₃. As a result, nitrogen oxides NO_{X} in the exhaust gas are reduced by the produced ammonia NH₃ to nitrogen N₂ and water H₂O in the selective catalytic reduction system SCR. The nitrogen N₂ and water H₂O are released into the outside air.

In this manner, the exhaust gas purification device 1 selectively reduces nitrogen oxides NO_{X} in the exhaust gas to purify it, thereby making the exhaust gas harmless.

### (Casing 60)

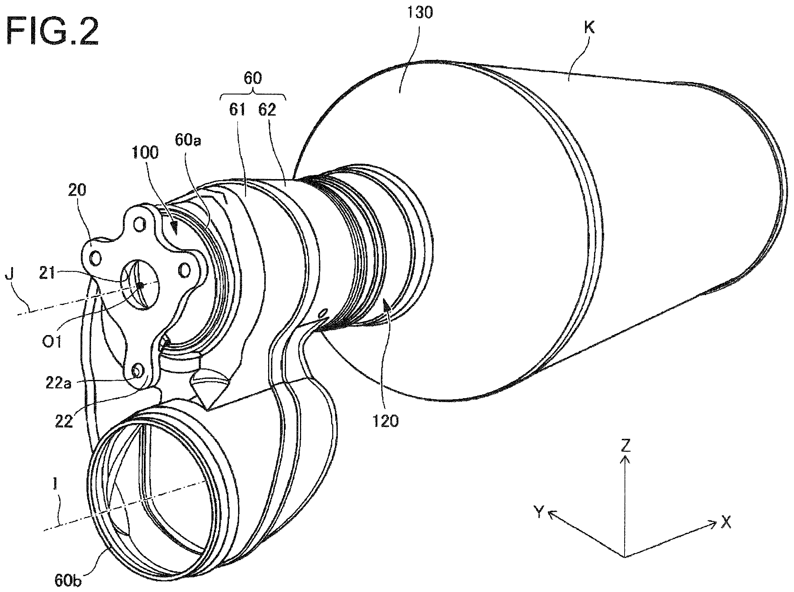

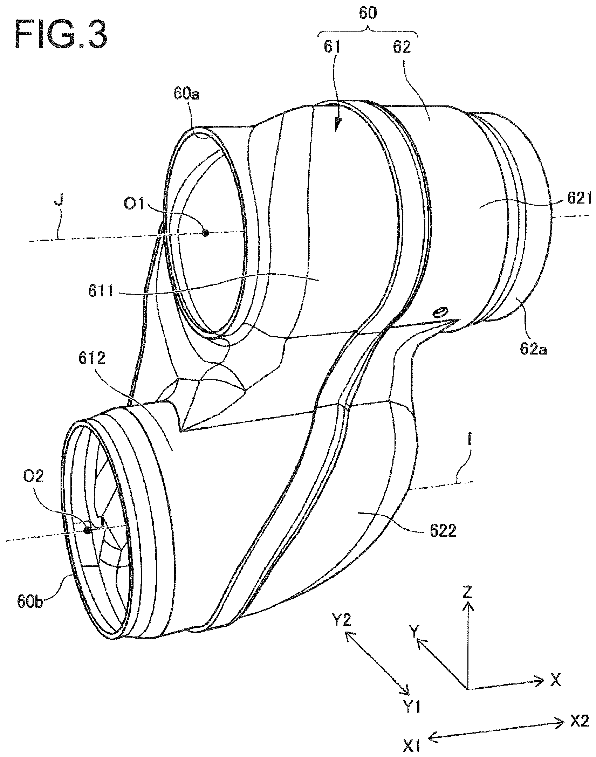

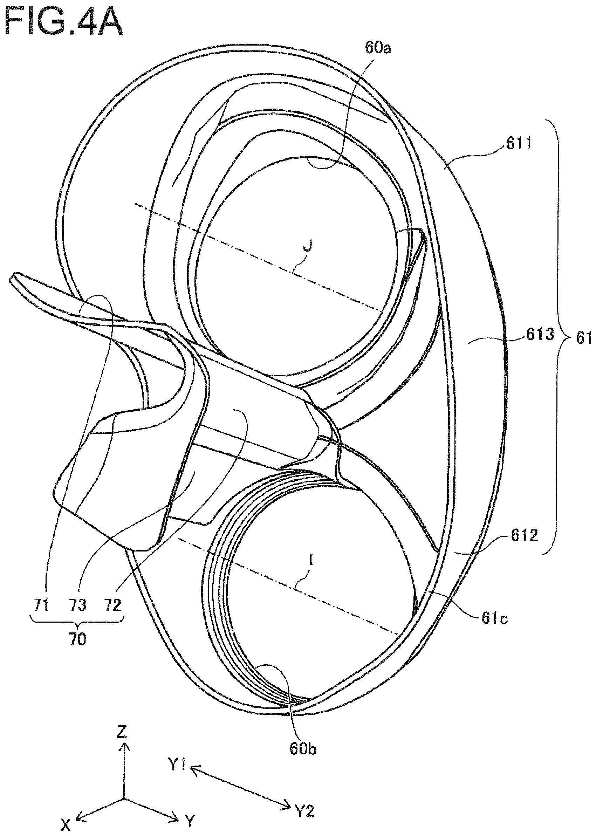

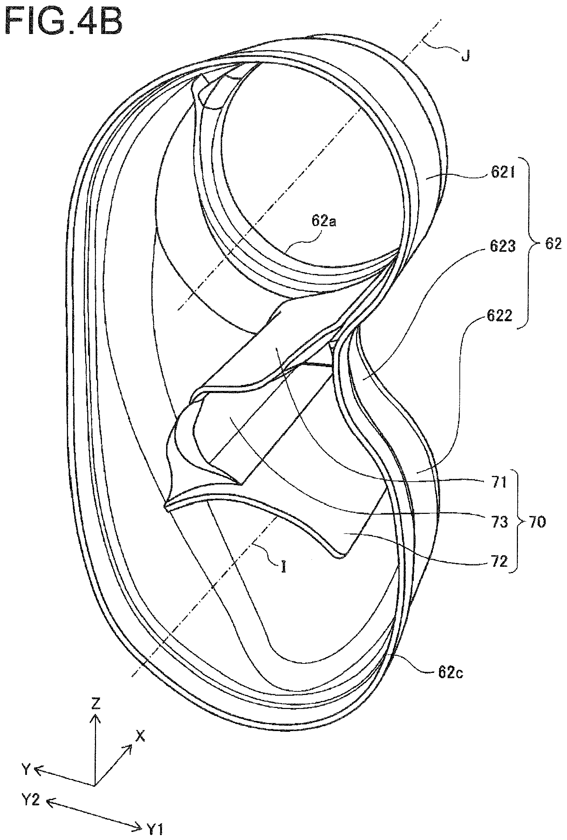

FIG. 2 is a perspective view of the exhaust gas purification device 1 viewed from the side where an exhaust inlet port 60b is located. FIG. 3 is a perspective view of the casing 60. FIG. 4A is a perspective view of a first casing 61 and the guide member 70. FIG. 4B is a perspective view of a second casing 62 and the guide member 70. In FIG. 2 and other figures, three directions: X direction, Y direction, and Z direction, perpendicular to each other are defined. Hereinafter, the negative side in the X direction may be referred to as "X1 side", while the positive side in the X direction may be referred to as "X2 side". Similarly, the negative side in the Y direction may be referred to as "Y1 side", and the positive side in the Y direction may be referred to as "Y2 side". Note that in FIG. 2 and other figures, when there are a plurality of like or identical elements, only one of them may be denoted by a reference numeral for the sake of easy viewing.

The casing 60 includes the first casing 61 and the second casing 62. The first casing 61 and the second casing 62 are connected to and integrated into each other. In this example, the first casing 61 and the second casing 62 are connected in the X direction in such a manner that the entire X1 side end of the second casing 62 fits in the entire X2 side end of the first casing 61.

The first casing 61 includes a first portion 611 that is located on the axis J side in the Z direction, a second portion 612 that is located on the axis I side in the Z direction, and a connection portion 613. The axis J and the axis I are parallel to each other (approximately parallel to the X direction) and are offset in the Z direction. The direction of the axis I corresponds to the exhaust flow direction SS in the container K0.

The first portion 611 and the second portion 612 are adjacent to each other in the Z direction. As illustrated in FIG. 4A, the first portion 611 and the second portion 612 are connected to each other in such a manner that their internal spaces communicate with each other in the Z direction.

The first portion 611 forms part of a columnar space (cylindrical space centered on the axis J) where the injector 100 is to be located.

As illustrated in FIGS. 2 and 3, the first portion 611 has a connection opening 60a into which the injector 100 is inserted at the end on the X1 side. The connection opening 60a has a circular shape, and its center is concentric with the spray port center O1 (described later). The injector 100 may be directly connected to the connection opening 60a. If the injector 100 is provided with a casing connection piece (not illustrated), the injector 100 may be connected to the connection opening 60a through the casing connection piece.

As illustrated in FIGS. 2 and 3, the second portion 612 has the inlet port 60b for exhaust gas from the internal combustion engine ENG at the end on the X1 side. The inlet port 60b has a circular shape, the center of which defines the inlet port center. In the second portion 612, the inlet port center O2 is located on the axis I (an example of the first axis).

The connection portion 613 is located between the first portion 611 and the second portion 612 in the Z direction to connect the first portion 611 and the second portion 612. As illustrated in FIG. 4A, the connection portion 613 has a curved surface, which is convex toward the Y2 side on the Y2 side, and is convex toward the Y2 side on the Y1 side. The curved surface is curved in the same direction as the convex shape of a second curved portion 72 of the guide member 70 (described later). In the connection portion 613, the radius of curvature of the curved surface is larger on the Y2 side than on the Y1 side.

The first portion 611, the second portion 612, and the connection portion 613 form an opening 61c as illustrated in FIG. 4A. The opening 61c has a shape that surrounds the connection opening 60a and the inlet port 60b.

The second casing 62 includes a third portion 621 that is located on the axis J side in the Z direction, a fourth portion 622 that is located on the axis I side in the Z direction, and a connection portion 623.

The third portion 621 and the fourth portion 622 are adjacent to each other in the Z direction. As illustrated in FIG. 4B, the third portion 621 and the fourth portion 622 are connected to each other in such a manner that their internal spaces communicate with each other in the Z direction.

As illustrated in FIGS. 3 and 4B, the third portion 621 has a connection opening 62a to which the baffle 120 is connected at the end on the X2 side. The connection opening 62a has a circular shape, and its center is located on the axis J.

Similarly to the first portion 611 of the first casing 61, the third portion 621 forms part of the columnar space (cylindrical space centered on the axis J) where the injector 100 is to be located. The third portion 621 is connected to the first portion 611 of the first casing 61 in the X direction, and thereby forms the columnar space where the injector 100 is to be located (hereinafter, also referred to as "urea water spray space S1") together with the first portion 611. The urea water spray space S1 forms part of the exhaust flow path S.

The X2 side end of the fourth portion 622 is closed. That is, the second casing 62 is open only at the connection opening 62a on the X2 side. The fourth portion 622 is connected to the second portion 612 of the first casing 61 in the X direction, and thereby forms a space including a columnar space centered on the axis I together with the second portion 612. The space defined by the fourth portion 622 and the second portion 612 forms part of the exhaust flow path S.

The connection portion 623 is located between the third portion 621 and the fourth portion 622 in the Z direction to connect the third portion 621 and the fourth portion 622. Similar to the connection portion 613 of the first casing 61 described above, as illustrated in FIG. 4B, the connection portion 623 has a curved surface, which is convex toward the Y2 side on the Y2 side, and is convex toward the Y2 side on the Y1 side. The curved surface is curved in the same direction as the convex shape of the second curved portion 72 of the guide member 70 (described later). In the connection portion 623, the radius of curvature of the curved surface is larger on the Y2 side than on the Y1 side.

The connection portion 623 is connected to the connection portion 613 of the first casing 61 in the X direction, and thereby forms a space that forms part of the exhaust flow path S together with the connection portion 613.

### (Guide member 70)

The guide member 70 is arranged in the casing 60. The guide member 70 is located on the Y1 side in the casing 60 and defines the boundary on the Y1 side in the exhaust flow path S. In other words, the guide member 70 is located in the space formed by the first casing 61 and the second casing 62 described above.

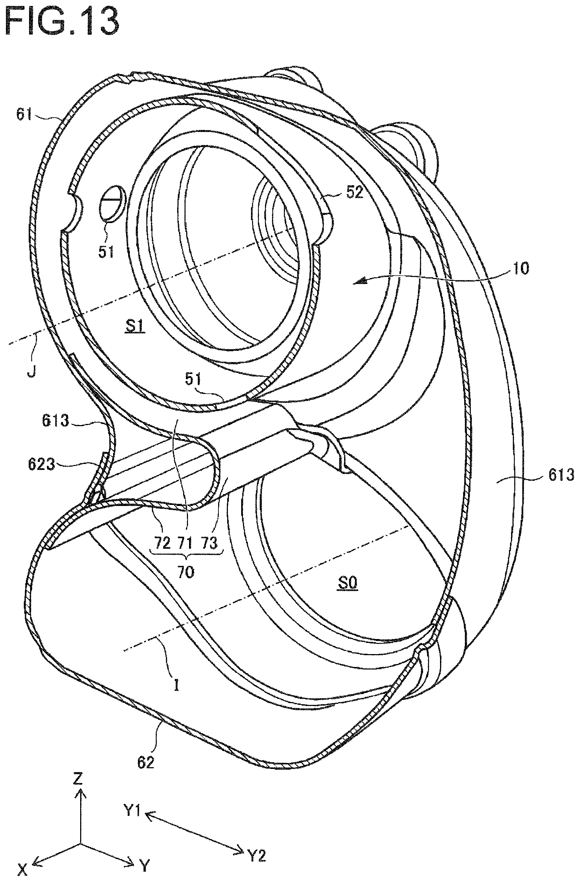

In the embodiment, the guide member 70 has a function of causing the flow of exhaust gas toward the urea water spray space S1 to meander as viewed in the direction of the axis I in the exhaust flow path S in cooperation with the connection portion 613 of the first casing 61 and the connection portion 623 of the second casing 62. Specifically, the guide member 70 has a function of causing an exhaust flow path portion S0, through which the exhaust gas taken in from the inlet port 60b flows to the urea water spray space S1, to curve (meander) convexly toward the Y2 side as viewed in the direction of the axis I in cooperation with the connection portion 613 of the first casing 61 and the connection portion 623 of the second casing 62. Hereinafter, this function is referred to as "meandering flow path forming function". Details of the meandering flow path forming function will be described later with reference to FIGS. 13 to 15.

As illustrated in FIGS. 4A and 4B, the X1 side end of the guide member 70 is connected to the side surface of the first casing 61 on the X1 side, and the X2 side end is connected to the side surface of the second casing 62 on the X2 side. That is, the guide member 70 extends from end to end in the X direction in the space formed by the first casing 61 and the second casing 62 in such a manner that the guide member 70 abuts on each of the first casing 61 and the second casing 62.

As illustrated in FIGS. 4A and 4B, the guide member 70 includes a first curved portion 71 that is located around the axis J, the second curved portion 72 that is located around the axis I, and a connection curved portion 73.

The first curved portion 71 has a substantially uniform cross section and extends in the X direction. The first curved portion 71 has a center of curvature on the axis J side as viewed in the direction of the axis J. For example, the center of curvature is located on or near the axis J.

The second curved portion 72 has a substantially uniform cross section and extends in the X direction. The second curved portion 72 has a center of curvature on the axis I side as viewed in the direction of the axis I. For example, the center of curvature is located on or near the axis I.

The connection curved portion 73 has a substantially uniform cross section and extends in the X direction. The connection curved portion 73 is located between the first curved portion 71 and the second curved portion 72 to connect the first curved portion 71 and the second curved portion 72. The connection curved portion 73 has a center of curvature on the Y1 side as viewed in the direction of the axis I. Accordingly, the connection curved portion 73 is curved so as to be convex toward the Y2 side as viewed in the direction of the axis I. With this, the connection curved portion 73 is connected to the first curved portion 71 to form an S-shape and also connected to the second curved portion 72 to form an S-shape as viewed in the direction of the axis I.

### (Injector 100)

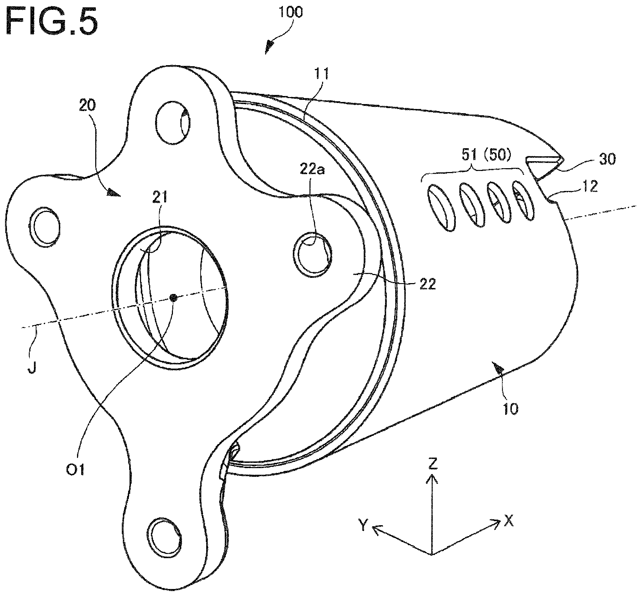

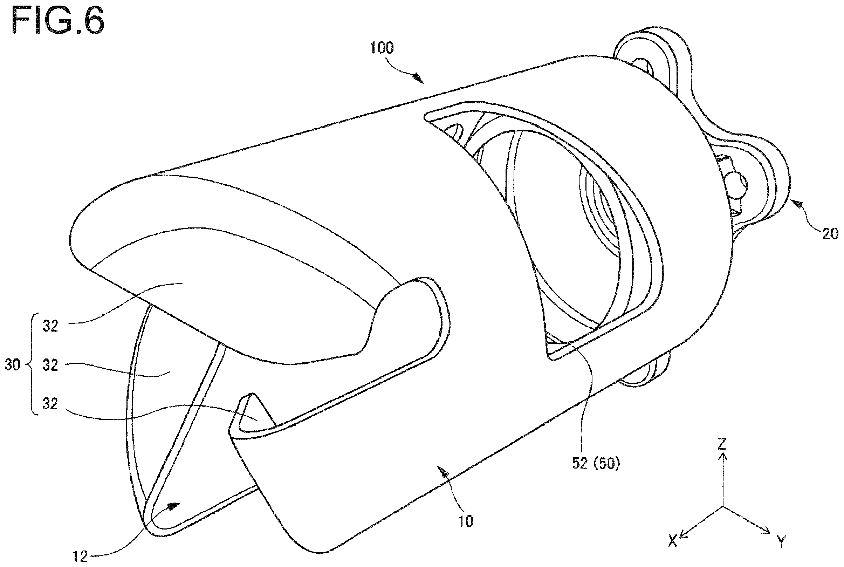

FIG. 5 is a perspective view of the injector 100 as viewed from the X1 side. FIG. 6 is a perspective view of the injector 100 as viewed from the X2 side.

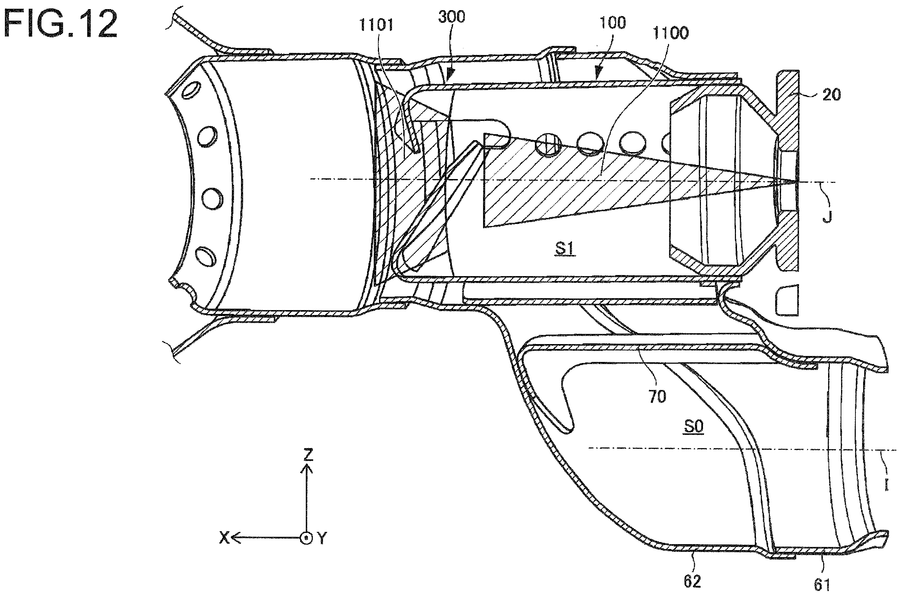

The injector 100 includes: an injector main body 10; a nozzle attachment portion 20 arranged in one end of the injector main body 10, to which a nozzle (not illustrated) for spraying urea water supplied from a supply source such as a tank or a pump (not illustrated) can be attached; and a control blade 30 arranged in the other end of the injector main body 10 to diffuse fine droplets of the urea water into the exhaust gas in the exhaust flow path S. The path of the urea water sprayed from the nozzle extends in a conical shape from the tip of the nozzle centering on the spray direction INJ when there is no flow of exhaust gas (described later with reference to FIG. 12). When there is a flow of exhaust gas, the urea water sprayed from the nozzle travels in the direction of the axis J while swirling around the axis J as well as mixing with the exhaust gas (described later with reference to FIG. 11).

The injector 100 is a member for adding urea water to the exhaust flow path S from the internal combustion engine ENG. The injector 100 has a function of guiding exhaust gas and urea water to diffuse them in cooperation with the casing 60. Details of the function will be described later.

The injector main body 10 (an example of the tubular member) of the injector 100 is located in the urea water spray space S1. The injector main body 10 is formed using, for example, a steel pipe having a predetermined plate thickness as a material by cutting and bending it. In the injector 100, the nozzle attachment portion 20, to which a spray valve (not illustrated) for spraying urea water is attached, is located in the X1 side end of the injector main body 10, while the control blade 30 that diffuses exhaust gas containing sprayed urea water is located in the X2 side end of the injector main body 10.

The injector 100 is connected to the casing 60 such that the injector main body 10 penetrates the casing 60. In other words, the injector 100 can be connected to the casing 60 such that only a part of the X1 side end (end on the nozzle side) of the injector main body 10 is exposed to the outside of the casing 60, and the X2 side end (end on the control blade 30 side) extends in the urea water spray space S1. With this configuration, part of the injector 100 is exposed in the exhaust flow path S. Thereby, the sprayed urea water merges with the exhaust gas from the internal combustion engine ENG.

Since the exhaust gas that has merged with the urea water can be diffused by the control blade 30, the injector 100 can mix the urea water in the exhaust gas evenly and uniformly. In addition, the exhaust gas flows into the selective catalytic reduction system SCR located downstream of the injector 100 uniformly with respect to the cross section.

Besides, the injector main body 10 extends to the exhaust flow path S (the urea water spray space S1) having a high temperature, and therefore can be maintained at a high temperature. This facilitates the thermal decomposition of the urea water when it comes into contact with the injector main body 10 that is maintained at a high temperature. Thereby, ammonia NH₃ can be efficiently produced. Thus, the injector 100 can uniformly mix the exhaust gas and the urea water in a short distance (short time), and can improve the reduction efficiency of the exhaust gas.

### (Injector main body 10)

As illustrated in FIG. 5, the injector main body 10 has a hollow cylindrical shape with the axis J as the central axis. The injector main body 10 has an opening 11 at one end and an opening 12 that opens to the connection opening at the other end. In the embodiment, the injector main body 10 is formed to be linear. The axis J of the injector main body 10 is parallel to the spray direction INJ of urea water from the nozzle and passes through the spray port center O1. The injector main body 10 is fixed to the inner wall surface of the casing 60.

The injector main body 10 is also fixed to the connection opening 60a of the casing 60 by an appropriate means such as welding. The injector main body 10 may be fixed to the connection opening 60a through a casing connection piece (not illustrated).

As illustrated in FIGS. 5 and 6, the injector main body 10 has an opening 50 in a part of the peripheral wall of the injector main body 10. The number, arrangement and opening area of the opening 50 are optimized and set so that homogeneous mixing can be achieved with less pressure loss in consideration of the flow of exhaust gas taken in from the opening 50 (direction, flow rate, or pressure), the flow of urea water sprayed from the nozzle (direction, flow rate, or pressure), and the flow generated by the flow of exhaust gas and the flow of urea water that have merged together. In this embodiment, the number, arrangement and opening area of the opening 50 are adjusted so that a swirling flow (see FIG. 11), which will be described later, is generated in the injector main body 10.

In the embodiment, as an example, the opening 50 includes four circular openings 51 arranged in the direction of the axis J and a rectangular opening 52 extending over a relatively wide circumferential range. The four circular openings 51 are also provided in other circumferential positions than those illustrated in FIG. 5 (see FIG. 13).

The urea water sprayed from the nozzle enters through the opening 11 at one end of the injector main body 10 and exits from the opening 12 at the other end, and at the same time, the exhaust gas from the upstream side of the exhaust flow path S enters through the opening 50 into the injector main body 10 and exits from the opening 12 at the other end of the injector main body 10.

### (Nozzle attachment portion 20)

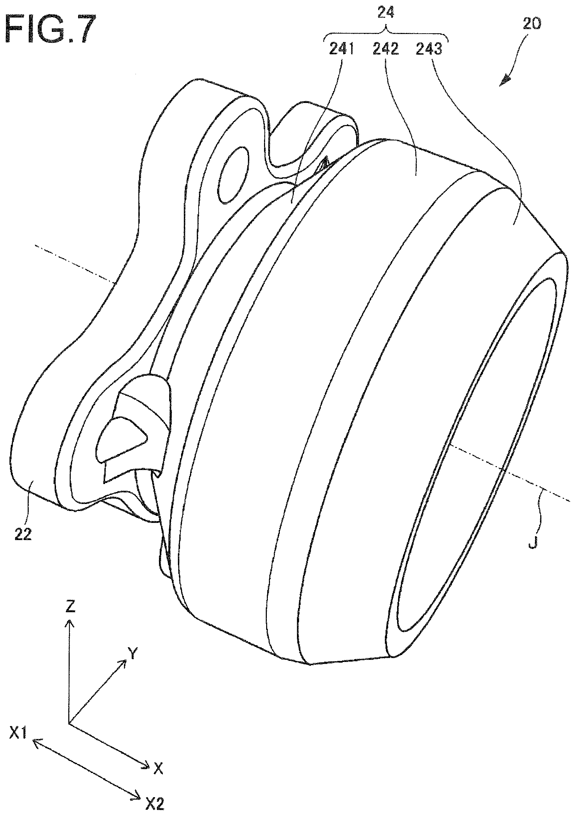

FIG. 7 is a perspective view of the nozzle attachment portion 20 as a single item.

As illustrated in FIGS. 2 and 5, the nozzle attachment portion 20 includes a flange 22 having an opening 21 that serves as a spray path for urea water from the nozzle and a plurality of attachment holes 22a. The opening 21 is located in substantially the center, while the attachment holes 22a are located on the periphery. The opening 21 has, for example, a circular shape, the center of which defines the spray port center O1. In the nozzle attachment portion 20, the spray port center O1 is located on the axis J (an example of the second axis).

The attachment holes 22a are formed in three locations in the flange 22, and the nozzle is fixed with a fixing tool such as a bolt using the attachment holes 22a. With this, the positional relationship between the nozzle and the injector 100 can be reliably defined. The number of attachment holes (22a) is not limited to three. Further, the nozzle attachment portion 20 need not necessarily be configured in this manner, and may be configured in any other suitable manner using, for example, a clamp as long as it has the opening 21 that serves as a spray path for urea water from the nozzle, and the nozzle can be attached to the injector main body 10.

The nozzle attachment portion 20 further includes a main body 24 that is connected to the flange 22. The main body 24 has a hollow cylindrical shape with the axis J as the central axis, and the hollow inside communicates with the opening 21.

In the embodiment, as illustrated in FIG. 7, the main body 24 includes a connection portion 241, a large diameter portion 242, and a tapered portion 243. The connection portion 241 is connected to the flange 22 at one end (X1 side end) in the direction of the axis J, and is connected to the large diameter portion 242 at the other end (X2 side end). The diameter of the connection portion 241 is gradually increased from the flange 22 side to be connected to the large diameter portion 242. The tapered portion 243 is connected to the large diameter portion 242 at one end (X1 side end) in the direction of the axis J, and has an opening at the other end (X2 side end). The tapered portion 243 is gradually increased in diameter from the other end side symmetrically with the connection portion 241 so as to be connected to the large diameter portion 242. That is, the tapered portion 243 is tapered toward the other end side. The tapered portion 243 has a function of controlling the flow of the sprayed urea water.

In the embodiment, the outer diameter of the large diameter portion 242 is substantially the same as the inner diameter of the injector main body 10. In the main body 24, the large diameter portion 242 is fixed by an appropriate means such as screws, welding, or adhesion. In this example, among the connection portion 241, the large diameter portion 242, and the tapered portion 243, only the connection portion 241 of the main body 24 is exposed from the injector main body 10.

### (Control blade 30)

The control blade 30 has a function of diffusing the urea water sprayed from the nozzle into the exhaust gas in the downstream of the exhaust flow path S together with the exhaust gas taken into the inside of the injector main body 10.

As illustrated in FIG. 6, the control blade 30 includes a plurality of blades 32 at the other end of the injector main body 10. The plurality of blades 32 are plate-like members, and are formed using a cylindrical part as a material, which is the same material as that of the injector main body 10, by cutting and bending the end of the part.

The free ends of the blades 32 intersect diagonally with the exhaust flow direction SS. Since the blades 32 intersect diagonally with the exhaust flow direction SS, the urea water and the exhaust gas flowing in the exhaust flow direction SS are brought to diffuse in a spiral form as the direction of their flow is changed by the blades 32. Further, the urea water sprayed from the nozzle collides with the blades 32 and is thereby broken up into fine droplets. Thus, the reduction efficiency can be improved.

In the embodiment, three blades (32) are provided in positions facing one another with respect to the exhaust flow direction SS at the other end of the injector main body 10; however, the number of blades is not limited to three, and there may be a single blade or any number of blades other than three.

The angle at which the blades 32 intersect with the exhaust flow direction SS is set according to the size of the cross section of the exhaust flow path S in the downstream from the injector main body 10 (the size of the selective catalytic reduction system SCR located in the downstream of the exhaust flow path S) and the distribution of the flow of exhaust gas (direction, flow rate, or pressure) in the downstream from the injector main body 10.

Besides, as in the embodiment, the blades 32 may be arranged so as to intersect with the exhaust flow direction SS at different angles. With this, the flow can be uniformly diffused over a wider area with respect to the cross section of the exhaust flow path S in the downstream from the injector main body 10.

The blades 32 may have a curved surface along a spiral shape. In this case, the swirling flow of exhaust gas (described later) inside the injector main body 10 can be maintained in the downstream of the exhaust flow path S from the other end of the injector main body 10.

With the control blade 30, the added urea water can be broken up into fine droplets, and the thermal decomposition and hydrolysis of the urea water are promoted. In addition, a helical flow can be generated by the flow of exhaust gas and the flow of the fine droplets of the urea water that have merged together. Thus, the urea water can be diffused and mixed in the exhaust gas passing through the exhaust flow path S. Moreover, since the flow travels in a spiral form, nitrogen oxides NO_{X} in the exhaust gas can be efficiently reduced in a short flow distance, i.e., in a limited narrow space.

### (Baffle 120)

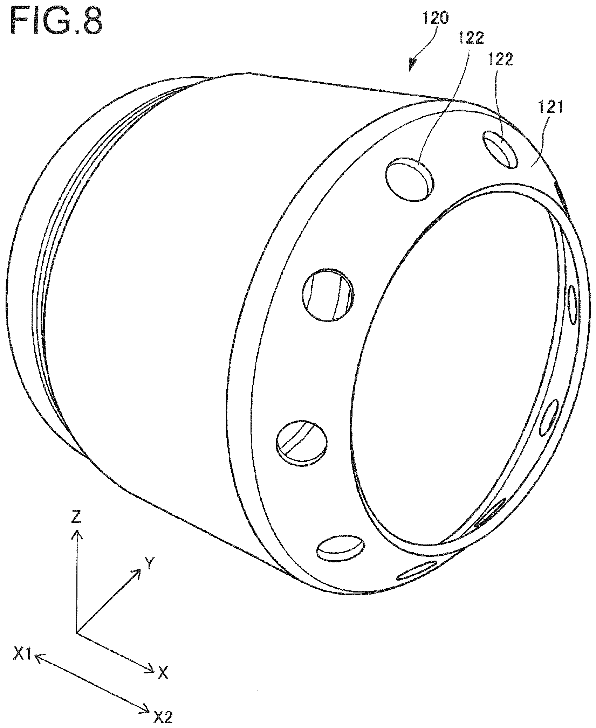

FIG. 8 is a perspective view of the baffle 120 as a single item.

As illustrated in FIG. 8, the baffle 120 has a hollow cylindrical shape with the axis J as the central axis. The baffle 120 is connected to the casing 60 (the connection opening 62a of the second casing 62) at the end on the X1 side, and forms part of the casing on the X2 side of the casing 60. The X1 side end of the baffle 120 faces the opening 12 of the injector main body 10 on the X2 side with a slight gap between them.

As illustrated in FIG. 8, the baffle 120 has a tapered portion 121 whose diameter is reduced toward the X2 side. The tapered portion 121 is provided with a plurality of openings 122 along the circumferential direction. While the openings 122 are illustrated as having a circular shape, they may have other shapes. The baffle 120 has a function of controlling the flow of exhaust gas mixed with urea water on the X2 side of the injector main body 10.

### (Connection pipe 130)

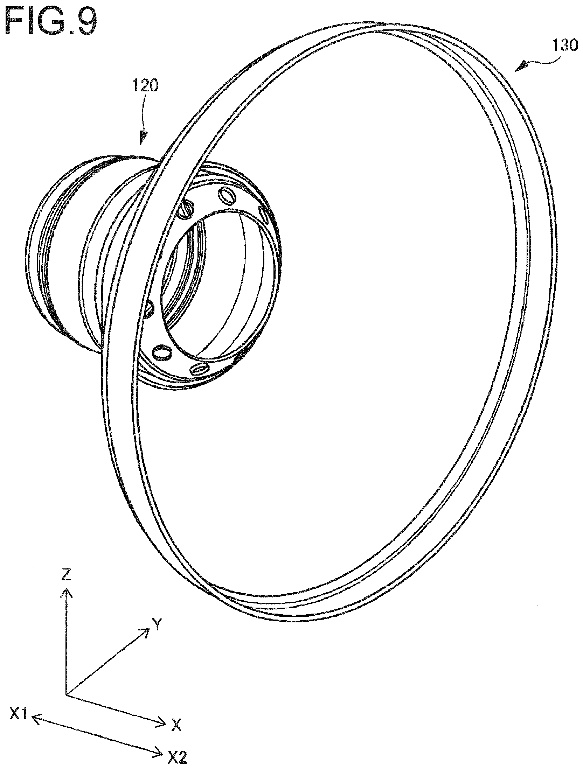

FIG. 9 is a perspective view of the connection pipe 130 as a single item.

As illustrated in FIGS. 2 and 9, the connection pipe 130 has a hollow cylindrical shape with the axis J as the central axis, and the diameter is increased toward the X2 side. The X1 side end of the connection pipe 130 is connected to the baffle 120, and the X2 side end is connected to the container K. In this example, as illustrated in FIG. 9, the connection pipe 130 is connected to the baffle 120 such that the X2 side end of the baffle 120 extends into the connection pipe 130 (such that the connection pipe 130 is inserted into the connection pipe 130).

### (Outlet part 140)

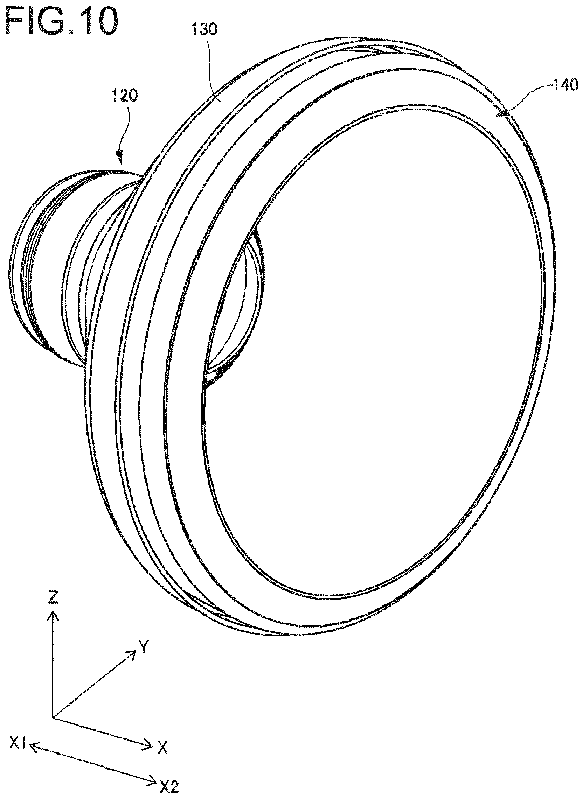

FIG. 10 is a perspective view illustrating the baffle 120 and the connection pipe 130 with the outlet part 140.

The outlet part 140 has an annular shape with the axis J as the central axis, and the diameter is reduced toward the X2 side. The X1 side end of the outlet part 140 is located inside the connection pipe 130 in the radial direction, and the X2 side end is exposed from the connection pipe 130. The outlet part 140 has a function of controlling the flow of exhaust gas mixed with urea water introduced into the container K.

### (Operation of the exhaust gas purification device 1 using the injector 100)

With reference to FIGS. 1, 11, and 12, the operation of the exhaust gas purification device 1 until the exhaust gas is purified thereby using the injector 100 will be described along the flow of exhaust gas.

FIG. 11 is a cross-sectional view of the exhaust gas purification device 1 for explaining the flow of exhaust gas and the like in the casing 60 of the exhaust gas purification device 1. In FIG. 11, the flow of exhaust gas and the like is schematically indicated by arrows R1 to R3. FIG. 12 is a diagram for explaining the diffusing operation of the control blade 30. Similarly to FIG. 11, FIG. 12 illustrates a cross-sectional view of the exhaust gas purification device 1. In FIG. 12, the radial spread of urea water is indicated by hatched areas 1100 and 1101. The hatched area 1100 schematically illustrates the spread of urea water before colliding with the control blade 30. The hatched area 1100 schematically illustrates the spread of urea water after colliding with the control blade 30.

As illustrated in FIG. 1, the exhaust gas containing nitrogen oxides NO_{X} discharged from the internal combustion engine ENG is guided to the exhaust gas purification device 1.

The exhaust gas guided to the exhaust gas purification device 1 then passes through the oxidation catalyst DOC located in the upstream of the exhaust flow path S. At this time, hydrocarbon HC and carbon monoxide CO, which are harmful components in the exhaust gas, are oxidatively purified by the oxidation catalyst DOC.

After passing through the oxidation catalyst DOC, the exhaust gas passes through the diesel particulate filter DPF located in the upstream of the exhaust flow path S1. At this time, the diesel particulate filter DPF collects or removes particulate matter from the exhaust gas.

Having passed through the diesel particulate filter DPF, the exhaust gas is introduced into the exhaust flow path S in the casing 60 through the inlet port 60b of the casing 60. As indicated by arrow R1 in FIG. 11, the exhaust gas introduced into the exhaust flow path S in the casing 60 obtains a component in the Z direction from the flow along the direction of the axis I, and travels through the exhaust flow path portion S0 to the urea water spray space S1 (the injector 100). The details of the flow indicated by arrow R1 will be described later with reference to FIGS. 13 to 15.

Part of the exhaust gas that has reached the urea water spray space S1 passes through the opening 50 and reaches the inside of the injector main body 10.

Part of the exhaust gas that has not passed through the opening 50 to reach the inside of the injector main body 10 travels outside the injector main body 10 and merges with a mixture of urea water and the exhaust gas flowing out from the other end of the injector main body 10.

Inside the injector main body 10, as schematically illustrated by arrows R2 and R3 in FIG. 11, the exhaust gas flows to the X2 side while swirling around the axis J. In the embodiment, a double swirling flow including a relatively weak swirling flow on the inner side in the radial direction (arrow R2) and a relatively strong swirling flow on the outer side in the radial direction (arrow R3) is realized. As a result, urea water can be efficiently reacted on the exhaust gas.

While the exhaust gas is flowing in this manner, the urea water, which has been turned into a fine spray or mist as being ejected from the nozzle attached to the injector 100, is further broken up into fine droplets with a smaller size by the swirling flow of the exhaust gas inside the injector main body 10. The urea water also undergoes a thermal decomposition and hydrolysis to produce ammonia NH₃.

The produced ammonia NH₃ merges with the exhaust gas that has reached the inside of the injector main body 10. Then, they reaches the control blade 30 while being mixed with each other.

Having reached the control blade 30, the exhaust gas and the ammonia NH₃ are diffused as being uniformly mixed by the control blade 30. Besides, part of the urea water, which has been turned into a fine spray or mist as being ejected from the nozzle attached to the injector 100, reaches the control blade 30 without having undergone a thermal decomposition and hydrolysis, and collides with the control blade 30. Thereby, the urea water is broken up into fine droplets, and also undergoes a thermal decomposition and hydrolysis to produce ammonia NH₃. The ammonia NH₃ is diffused while being uniformly mixed with the exhaust gas by the control blade 30 in the same manner as described above. FIG. 12 schematically illustrates how the exhaust gas, urea water, and ammonia NH₃ are diffused in the radial direction by the control blade 30.

Having passed through the injector main body 10 while being diffused as well as being mixed with each other, the exhaust gas and ammonia NH₃ reach the selective catalytic reduction system SCR.

The nitrogen oxides NO_{X} and ammonia NH₃ in the exhaust gas that have reached the selective catalytic reduction system SCR are reduced by the catalyst supported on the selective catalytic reduction system SCR to nitrogen N₂ and water H₂O.

After passing through the selective catalytic reduction system SCR, the exhaust gas reaches the ammonia slip catalyst ASC located downstream of the selective catalytic reduction system SCR in the exhaust flow path S. The ammonia slip catalyst ASC removes leftover ammonia NH₃ from the exhaust gas that has passed through the selective catalytic reduction system SCR. Then, the nitrogen N2 and water H2O are appropriately released into the outside air.

In this manner, the exhaust gas purification device 1 efficiently purifies nitrogen oxides NO_{X} in the exhaust gas to make the exhaust gas substantially harmless. Thus, the exhaust gas purification device 1 and the injector 100 of the embodiment can provide the high reduction efficiency. As a result, the exhaust gas purification device 1 can be made compact as a whole.

### (Meandering flow path forming function)

With reference to FIGS. 13 to 15, a detailed description will be given below of the flow of exhaust gas and the like in the casing 60 of the exhaust gas purification device 1 and the configuration related thereto.

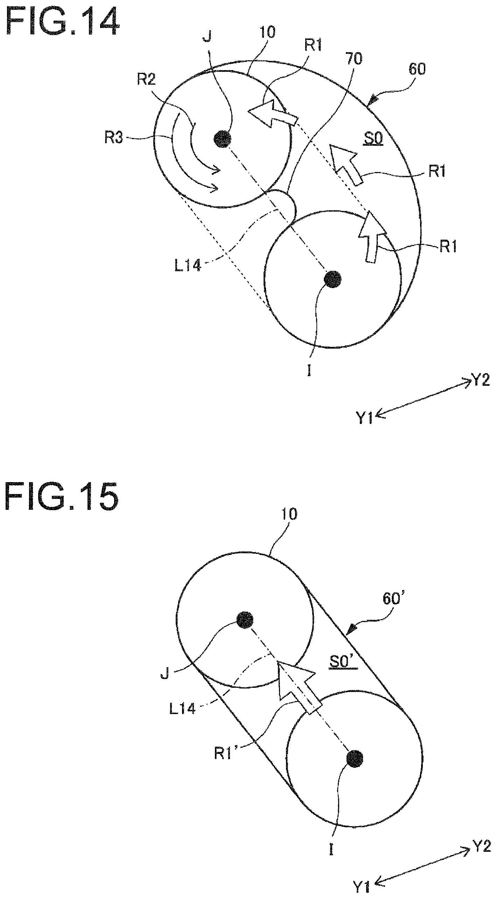

FIG. 13 is a perspective cross-sectional view passing through the exhaust flow path portion S0 and the urea water spray space S1. FIG. 14 is a schematic diagram of the exhaust flow path S (the exhaust flow path portion S0 leading to the urea water spray space S1) illustrated in FIG. 13 and the flow of exhaust gas therein. FIG. 15 is a schematic diagram of an exhaust flow path portion S0' leading to the urea water spray space S1 and the flow of exhaust gas therein according to a comparative example.

In the embodiment, as illustrated in FIGS. 13 and 14, the exhaust flow path portion S0 is offset to the Y2 side with respect to the line segment L14 that connects the axis I and the axis J as viewed in the direction of the axis J. Specifically, the exhaust flow path portion S0 is convexly curved toward the Y2 side as viewed in the direction of the axis J. With this, as indicated by arrow R1 in FIG. 14, a meandering flow along the curved shape of the exhaust flow path portion S0 (i.e., a curved flow having a center of curvature on the side of the line segment L14) can be generated in the exhaust gas in the exhaust flow path portion S0. That is, as illustrated in FIG. 14, the connection curved portion 73 of the guide member 70 has a curved shape having a center of curvature on the side of the line segment L14, and the casing 60 (the connection portion 613) also has a curved shape having a center of curvature on the side of the line segment L14. Thus, the entire exhaust flow path portion S0 has a curved shape having a center of curvature on the side of the line segment L14.

In this exhaust flow path portion S0, the flow of exhaust gas can efficiently promote the generation of a swirling flow (see arrows R2 and R3) in the injector main body 10. Since the generation of a swirling flow is efficiently promoted in the injector main body 10, urea water can be efficiently reacted on the exhaust gas. Hereinafter, the function in which the flow of exhaust gas in the exhaust flow path portion S0 promotes the generation of a swirling flow in the injector main body 10 is referred to as "swirling flow promoting function".

Preferably, in the exhaust flow path portion S0, the boundary on the center of curvature side is located on the Y2 side with respect to the line segment L14 as viewed in the direction of the axis J to enhance the swirling flow promoting function. In other words, in the exhaust flow path portion S0, preferably, the entire curved portion is located on the Y2 side with respect to the line segment L14 in order to enhance the swirling flow promoting function. This makes it easier to reduce the radius of curvature of the exhaust flow path portion S0 as a whole as well as enhancing the swirling flow promoting function. Incidentally, the boundary on the center of curvature side is defined by the guide member 70, in particular, the connection curved portion 73 of the guide member 70.

In the embodiment, the injector main body 10 is communicated with the casing 60 and the guide member 70 (in particular, the portion that forms the exhaust flow path portion S0) such that the curved flow in the exhaust flow path portion S0 promotes the generation of a swirling flow around the axis J in the injector main body 10. For example, as illustrated in FIG. 13, the injector main body 10 is arranged such that the rectangular opening 52 is located in the exhaust flow path portion S0. With this, the exhaust gas from the exhaust flow path portion S0 is easily introduced into the injector main body 10 through the rectangular opening 52. Thus, the generation of a swirling flow around the axis J is promoted in the injector main body 10.

FIG. 15 illustrates a comparative example in which, differently from the embodiment, the exhaust flow path portion S0' leading to the urea water spray space S1 is not convexly curved toward the Y2 side as viewed in the direction of the axis J, and is substantially symmetric with respect to the line segment that connects the axis I and the axis J. In this case, a linear (shortest) flow of exhaust gas, which is directed from the axis I toward the axis J as viewed in the direction of the axis J, is generated as indicated by arrow R1' in FIG. 15. Such a linear (shortest) flow of exhaust gas has substantially no effect on producing a swirling flow around the axis J. On the other hand, according to the embodiment, as described above, the exhaust gas flows while curving (meandering) along the curved shape of the exhaust flow path portion S0, thereby enabling the generation of a swirling flow around the axis J.

While certain embodiments have been illustrated and described herein, it is to be understood that the scope of the inventions is not limited to the specific embodiments. Various changes, modifications, and alterations may be made without departing from the scope of the disclosure as described in the claims. As will be appreciated, elements described in the embodiments herein can be combined, exchanged, and/or eliminated so as to provide a number of additional embodiments of the present disclosure.

For example, in the above embodiment, the exhaust flow path portion S0 is described as being offset to the Y2 side with respect to the line segment L14 that connects the axis I and the axis J as viewed in the direction of the axis J; however, it may be offset to the opposite side. That is, the exhaust flow path portion S0 may be offset to the Y1 side with respect to the line segment L14 that connects the axis I and the axis J as viewed in the direction of the axis J.

Furthermore, while, in the above embodiment, the axis J and the axis I are represented as being parallel to each other, they need not necessarily be parallel to each other.

## Claims

1. An exhaust gas purification device (1) comprising:
a flow path forming member (60, 70, 120, 130, 140) that forms an exhaust flow path (S) for exhaust gas discharged from an internal combustion engine, and includes an exhaust inlet port (60b) and a connection opening (62a) from which the exhaust gas flows out, wherein a center (O2) of the exhaust inlet port is located on a first axis (I), and a center of the connection opening is located on a second axis (J) different from the first axis; and
a tubular member (10) having a tubular shape, wherein the tubular member is located in part of the exhaust flow path, and includes a peripheral wall having an opening (50) to take in the exhaust gas, wherein the tubular member is connected to a nozzle to spray a reducing agent into the tubular member at one end, and has an opening (12) that opens to the connection opening at another end, and wherein, in the tubular member, a center (O1) of a spray port to spray the reducing agent is located on the second axis,
wherein the exhaust flow path includes an exhaust flow path portion (S0) leading to the tubular member, and the exhaust flow path portion is offset to one side with respect to a line segment (L14) that connects the center of the exhaust inlet port on the first axis and the center of the spray port on the second axis as viewed in a direction of the second axis,
**characterized in that**
the tubular member includes, at the other end, a tip bent inward to form a control blade (30) that spirally diffuses the reducing agent.

2. The exhaust gas purification device according to claim 1, wherein
the opening of the tubular member includes a plurality of circular openings (51) and a rectangular opening (52) larger than the circular openings, and
in the tubular member, a flow swirling around the second axis as viewed in the direction of the second axis is caused to be generated in the exhaust gas.

3. The exhaust gas purification device according to claim 1 or 2, wherein
the tubular member includes a nozzle attachment portion (20) to attach the nozzle therein,
the nozzle attachment portion includes a tapered portion (243) whose diameter is reduced toward the other end of the tubular member, and
the tapered portion of the nozzle attachment portion is configured to control a flow of the reducing agent sprayed.

4. The exhaust gas purification device according to any one of claims 1 to 3, wherein
the exhaust flow path portion includes a guide member (70) that causes a curved flow to be generated in the exhaust gas in the exhaust flow path portion, the curved flow having a center of curvature on a side of the line segment as viewed in the direction of the second axis, and
the guide member includes a first curved portion (71) that is convex toward the first axis, a second curved portion (72) that is convex toward the second axis, and a connection curved portion (73) that is located between the first curved portion and the second curved portion, and is convex toward the one side.

5. The exhaust gas purification device according to any one of claims 1 to 4, further comprising a cylindrical baffle (120) that is located on a downstream side of the tubular member, wherein
the baffle includes a tapered portion (121) whose diameter is reduced toward the downstream side, and
the tapered portion of the baffle has a plurality of openings (122) along a circumferential direction.

6. The exhaust gas purification device according to any one of claims 1 to 5, wherein the exhaust flow path portion is convexly curved toward the one side as viewed in the direction of the second axis.

7. The exhaust gas purification device according to any one of claims 1 to 6, wherein the exhaust flow path portion has a curved shape having a center of curvature on a side of the line segment as viewed in the direction of the second axis.

8. The exhaust gas purification device according to any one of claims 1 to 7, wherein a boundary on a center of curvature side in the exhaust flow path portion is located on the one side with respect to the line segment as viewed in the direction of the second axis.

## Patentansprüche

1. Abgasreinigungsvorrichtung (1), die Folgendes umfasst:
ein einen Strömungsweg bildendes Element (60, 70, 120, 130, 140), das einen Abgasströmungsweg (S) für von einem Verbrennungsmotor ausgestoßenes Abgas bildet und eine Abgaseinlassöffnung (60b) und eine Verbindungsöffnung (62a) aufweist, aus der das Abgas ausströmt, wobei ein Mittelpunkt (O2) der Abgaseinlassöffnung auf einer ersten Achse (I) angeordnet ist und ein Mittelpunkt der Verbindungsöffnung auf einer zweiten Achse (J) angeordnet ist, die von der ersten Achse verschieden ist; und
ein röhrenförmiges Element (10) mit einer röhrenförmigen Form, wobei das röhrenförmige Element in einem Teil des Abgasströmungsweges angeordnet ist und eine Umfangswand mit einer Öffnung (50) zum Aufnehmen des Abgases aufweist, wobei das röhrenförmige Element mit einer Düse verbunden ist, um ein Reduktionsmittel in das röhrenförmige Element an einem Ende zu sprühen, und eine Öffnung (12) aufweist, die sich zu der Verbindungsöffnung an einem anderen Ende öffnet, und wobei in dem röhrenförmigen Element ein Mittelpunkt (O1) einer Sprühöffnung zum Sprühen des Reduktionsmittels auf der zweiten Achse angeordnet ist,
wobei der Abgasströmungsweg einen Abgasströmungswegabschnitt (S0) umfasst, der zu dem röhrenförmigen Element führt, und der Abgasströmungswegabschnitt in Bezug auf ein Liniensegment (L14), das die Mitte der Abgaseinlassöffnung auf der ersten Achse und die Mitte der Sprühöffnung auf der zweiten Achse verbindet, in Richtung der zweiten Achse gesehen, zu einer Seite versetzt ist,
**dadurch gekennzeichnet, dass**
das röhrenförmige Element am anderen Ende eine Spitze aufweist, die nach innen gebogen ist, um einen Steuerflügel (30) zu bilden, der das Reduktionsmittel spiralförmig verteilt.

2. Abgasreinigungsvorrichtung nach Anspruch 1, wobei
die Öffnung des röhrenförmigen Elements eine Vielzahl von kreisförmigen Öffnungen (51) und eine rechteckige Öffnung (52), die größer als die kreisförmigen Öffnungen ist, aufweist, und
in dem röhrenförmigen Element ein Strömen des Abgases bewirkt wird, der um die zweite Achse, gesehen in der Richtung der zweiten Achse, wirbelt.

3. Abgasreinigungsvorrichtung nach Anspruch 1 oder 2, wobei
das röhrenförmige Element einen Düsenbefestigungsabschnitt (20) enthält, um die Düse darin zu befestigen,
der Düsenbefestigungsabschnitt einen verjüngten Abschnitt (243) aufweist, dessen Durchmesser zum anderen Ende des röhrenförmigen Elements hin abnimmt, und
der sich verjüngende Teil des Düsenbefestigungsabschnitts so konfiguriert ist, dass er ein Strömen des versprühten Reduktionsmittels steuert.

4. Abgasreinigungsvorrichtung nach einem der Ansprüche 1 bis 3, wobei
der Abgasströmungswegabschnitt ein Leitelement (70) enthält, das bewirkt, dass in dem Abgas in dem Abgasströmungswegabschnitt eine gekrümmte Strömung erzeugt wird, wobei die gekrümmte Strömung einen Krümmungsmittelpunkt auf einer Seite des Liniensegments, gesehen in Richtung der zweiten Achse, aufweist, und
das Leitelement einen ersten gekrümmten Abschnitt (71), der in Richtung der ersten Achse konvex ist, einen zweiten gekrümmten Abschnitt (72), der in Richtung der zweiten Achse konvex ist, und einen gekrümmten Verbindungsabschnitt (73), der sich zwischen dem ersten gekrümmten Abschnitt und dem zweiten gekrümmten Abschnitt befindet und in Richtung der einen Seite konvex ist, aufweist.

5. Abgasreinigungsvorrichtung nach einem der Ansprüche 1 bis 4, die ferner ein zylindrisches Ablenkblech (120) umfasst, das sich an einer stromabwärts gelegenen Seite des röhrenförmigen Elements befindet, wobei
das Ablenkblech einen verjüngten Abschnitt (121) aufweist, dessen Durchmesser zur stromabwärtigen Seite hin abnimmt, und
der sich verjüngende Abschnitt des Ablenkblechs eine Mehrzahl von Öffnungen (122) entlang einer Umfangsrichtung aufweist.

6. Abgasreinigungsvorrichtung nach einem der Ansprüche 1 bis 5, wobei der Abgasströmungswegabschnitt in Richtung der zweiten Achse gesehen zu der einen Seite hin konvex gekrümmt ist.

7. Abgasreinigungsvorrichtung nach einem der Ansprüche 1 bis 6, wobei der Abgasströmungswegabschnitt eine gekrümmte Form mit einem Krümmungsmittelpunkt auf einer Seite des Liniensegments, gesehen in Richtung der zweiten Achse, aufweist.

8. Abgasreinigungsvorrichtung nach einem der Ansprüche 1 bis 7, wobei eine Begrenzung auf der Seite des Krümmungsmittelpunkts im Abgasströmungswegabschnitt auf der einen Seite in Bezug auf das Liniensegment, gesehen in Richtung der zweiten Achse, liegt.

## Revendications

1. Dispositif de purification de gaz d'échappement (1) comprenant :
un élément de formation de trajet d'écoulement (60, 70, 120, 130, 140) qui forme un trajet d'écoulement d'échappement (S) pour un gaz d'échappement déchargé d'un moteur à combustion interne, et comporte un orifice d'entrée d'échappement (60b) et une ouverture de raccordement (62a) à partir de laquelle le gaz d'échappement s'écoule, dans lequel un centre (O2) de l'orifice d'entrée d'échappement est situé sur un premier axe (I), et un centre de l'ouverture de raccordement est situé sur un second axe (J) différent du premier axe ; et
un élément tubulaire (10) ayant une forme tubulaire, dans lequel l'élément tubulaire est situé dans une partie du trajet d'écoulement d'échappement, et comporte une paroi périphérique ayant une ouverture (50) pour recevoir le gaz d'échappement, dans lequel l'élément tubulaire est raccordé à une buse pour pulvériser un agent réducteur dans l'élément tubulaire au niveau d'une extrémité, et a une ouverture (12) qui s'ouvre sur l'ouverture de raccordement au niveau d'une autre extrémité, et dans lequel, dans l'élément tubulaire, un centre (O1) d'un orifice de pulvérisation pour pulvériser l'agent réducteur est situé sur le second axe,
dans lequel le trajet d'écoulement d'échappement comporte une partie de trajet d'écoulement d'échappement (S0) menant à l'élément tubulaire, et la partie de trajet d'écoulement d'échappement est décalée d'un côté par rapport à un segment de ligne (L14) qui relie le centre de l'orifice d'entrée d'échappement sur le premier axe et le centre de l'orifice de pulvérisation sur le second axe tel que vu dans une direction du second axe,
**caractérisé en ce que**
l'élément tubulaire comporte, au niveau de l'autre extrémité, une pointe courbée vers l'intérieur pour former une lame de commande (30) qui diffuse en spirale l'agent réducteur.

2. Dispositif de purification de gaz d'échappement selon la revendication 1, dans lequel
l'ouverture de l'élément tubulaire comporte une pluralité d'ouvertures circulaires (51) et une ouverture rectangulaire (52) plus grande que les ouvertures circulaires, et
dans l'élément tubulaire, un écoulement tourbillonnant autour du second axe, tel que vu dans la direction du second axe, est amené à être généré dans le gaz d'échappement.

3. Dispositif de purification de gaz d'échappement selon la revendication 1 ou 2, dans lequel
l'élément tubulaire comporte une partie de fixation de buse (20) pour fixer la buse à l'intérieur de celui-ci,
la partie de fixation de buse comporte une partie conique (243) dont le diamètre est réduit vers l'autre extrémité de l'élément tubulaire, et
la partie effilée de la partie de fixation de buse est conçue pour réguler un écoulement de l'agent réducteur pulvérisé.

4. Dispositif de purification de gaz d'échappement selon l'une quelconque des revendications 1 à 3, dans lequel
la partie de trajet d'écoulement d'échappement comporte un élément de guidage (70) qui amène un écoulement incurvé à être généré dans le gaz d'échappement dans la partie de trajet d'écoulement d'échappement, le flux incurvé ayant un centre de courbure sur un côté du segment de ligne tel que vu dans la direction du second axe, et
l'élément de guidage comporte une première partie incurvée (71) qui est convexe vers le premier axe, une seconde partie incurvée (72) qui est convexe vers le second axe, et une partie incurvée de raccordement (73) qui est située entre la première partie incurvée et la seconde partie incurvée, et est convexe vers le côté.

5. Dispositif de purification de gaz d'échappement selon l'une quelconque des revendications 1 à 4, comprenant en outre un déflecteur cylindrique (120) qui est situé sur un côté aval de l'élément tubulaire, dans lequel
le déflecteur comporte une partie conique (121) dont le diamètre est réduit vers le côté aval, et
la partie conique du déflecteur a une pluralité d'ouvertures (122) le long d'une direction circonférentielle.

6. Dispositif de purification de gaz d'échappement selon l'une quelconque des revendications 1 à 5, dans lequel la partie de trajet d'écoulement d'échappement est incurvée de manière convexe vers le côté tel que vu dans la direction du second axe.

7. Dispositif de purification de gaz d'échappement selon l'une quelconque des revendications 1 à 6, dans lequel la partie de trajet d'écoulement d'échappement a une forme incurvée ayant un centre de courbure sur un côté du segment de ligne tel que vu dans la direction du second axe.

8. Dispositif de purification de gaz d'échappement selon l'une quelconque des revendications 1 à 7, dans lequel une limite sur un côté du centre de courbure dans la partie de trajet d'écoulement d'échappement est située sur le côté par rapport au segment de ligne tel que vu dans la direction du second axe.
